# EUROPEAN PATENT APPLICATION

(11) **EP 1 690 441 A1**
(43) Date of publication of application: **16.08.2006**
(21) Application number: 06075351.4
(22) Date of filing: 14.02.2006
(51) Int. Cl.: A01C 23/02

(54) **Apparatus for manuring grassland**

(30) Priority: 14.02.2005 NL 1028269
(71) Applicant: Schuitemaker Machines B.V., NL-7461 AG Rijssen (NL)
(72) Inventor: te Boekhorst, Paulus Andreas Johannes, 7434 SJ Lettele (NL)
(74) Representative: Winckels, Johannes Hubertus F.

(57) **Abstract**

Apparatus for manuring farmland, equipped with discs (10) arranged for forming a slit (14) in the soil (13) and a number of juxtaposed manure injectors (15) each situated, viewed in the direction of advance (7), behind one of the discs (10). Disc carriers (8) each comprise at least one fixed part (22) fixed with respect to the main beam (6) at least in vertical direction and a movable part (23) movable with a vertical directional component and are provided with an operating element (24) for moving the movable part (23) from a pulled-up position to a working position. The operating elements are each designed as a telescopic leg (24), a fixed part (25) of which forms a fixed portion of the fixed disc carrier part (22). A movable part (26) of the telescopic leg (24) is guided telescopically relative to the fixed disc carrier part (25) and forms a portion of the movable disc carrier part (23).

## Description

### FIELD AND BACKGROUND OF THE INVENTION

This invention relates to an apparatus according to the introductory portion of claim 1.

Such an apparatus is known from Dutch patent application 9200021. Such apparatuses are used in practice for manuring especially grassland. To that end, the apparatus is attached to a vehicle or a trailer which is driven over the land to be manured. The discs then cut slits in the land. The manure pump pumps liquid manure or liquefied manure from a manure tank, which is mostly carried along on the vehicle or the trailer, to the manure injectors. From the manure injectors, the manure is injected closely behind the discs into the slits. The slits can thereupon be closed. As the manure is injected into slits, exposure of manure to the air is reduced. Ammonia emission and odor spread are thereby limited.

The manure injectors operatively terminate closely above the soil or extend over some distance into the slit formed and are preferably manufactured from flexible material such as rubber and may or may not comprise outflow spout protectors which are situated just before the outflow spouts, for clearing any obstacles by which the outflow spout might otherwise be damaged.

To allow the apparatus to be driven from one parcel of land to another without underway forming slits or damaging the discs by contact with road surfaces and the like, and also to allow, upon reaching the edge of a parcel, maneuvering with a small radius without plowing the soil, the discs are adapted to be pulled up from a working position for forming slits to a pulled-up position. Further, the discs in the operating position need to be capable of moving up and down relative to each other, so that the apparatus can adjust to unevenness and curvature in the surface of a terrain to be manured.

In the apparatus according to the above-mentioned Dutch patent application 9200021, the disc carriers are each divided into a fixed part, fixed in vertical direction with respect to the main beam, and a movable part movable with a vertical directional component, which forms a rod system together with the fixed part. The axes about which the rods can be hinged relative to each other define a parallelogram.

Two opposite rods of the movable part are made of L-shaped design, such that angle points of the L-shaped rods are situated near diagonally opposite angle points of the parallelogram and both legs of both L-shaped rods project to the other L-shaped rod. Mounted between ends of two legs of the two L-shaped rods, each leg projecting freely from one of the hinges of the parallelogram, is a hydraulic cylinder. By expanding the hydraulic cylinder, these ends of the legs of the L-shaped rods are pushed away from each other. As a result, of the respective disc carrier, the rod on which the discs are mounted is pressed towards the soil, such that the disc is pressed against the soil with a force sufficiently great, upon moving the vehicle or the trailer, to form slits in the soil.

Conversely, contraction of the hydraulic cylinder results in the discs being pulled up from the ground, allowing the apparatus to be moved without the discs touching the ground. A drawback of this construction is that it is complex and hence costly.

### SUMMARY OF THE INVENTION

It is an object of the invention to provide an apparatus of simpler construction for manuring farmland and in particular grassland.

This object is achieved according to the invention by providing an apparatus according to claim 1.

As the operating elements are each designed as a telescopic leg, comprising a fixed part forming a fixed portion of the fixed part of the disc carrier and a movable part which is guided telescopically relative to the fixed part and which forms a portion of the movable part of the disc carrier, the operating elements function at the same time as guide of the up and down movement of the discs. For that purpose, accordingly, no complex rod system or the like is needed.

Special embodiments of the invention are laid down in the dependent claims.

In the following description, the invention as well as features, effects and details thereof will be further elucidated on the basis of an exemplary embodiment, with reference to the drawing.

### BRIEF DESCRIPTION OF THE DRAWINGS

Fig. 1 is a rear view of an example of an apparatus according to the invention;
Fig. 2 is a side elevation in cross section of the apparatus according to Fig. 1, representing *inter alia* a main beam as well as a disc carrier and a disc in pulled-up position;
Fig. 3 is a side elevation similar to Fig. 2, but representing the disc carrier and the disc in lowered position;
Fig. 4 is a schematic top plan view of the apparatus according to Figs. 1-3; and
Fig. 5 is a schematic rear view of the apparatus according to Figs. 1-4 in two positions.

### DETAILED DESCRIPTION

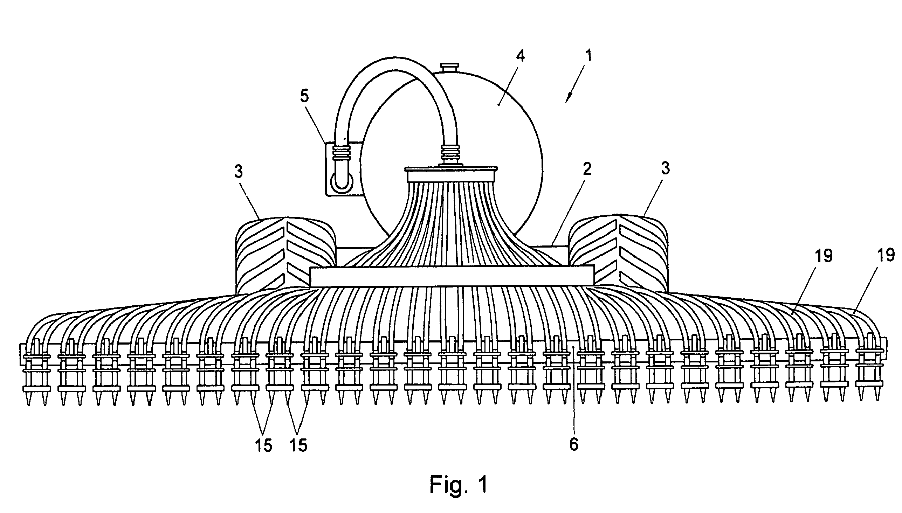

The apparatus according to the example shown in Figs. 1-5 is designed as a trailer 1 with a chassis 2, wheels 3 connected with the chassis, and a manure tank 4 carried by the chassis 2 and connected with a manure pump 5 for pumping manure out of the tank 4. However, an apparatus according to the invention may also be designed for coupling to a trailer or a vehicle and to a manure tank or towable manure supply hose which are already available or are provided separately.

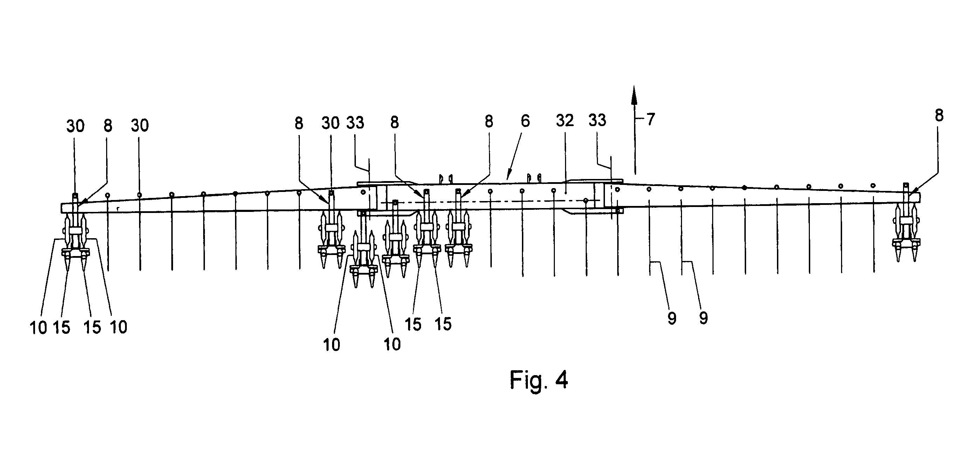

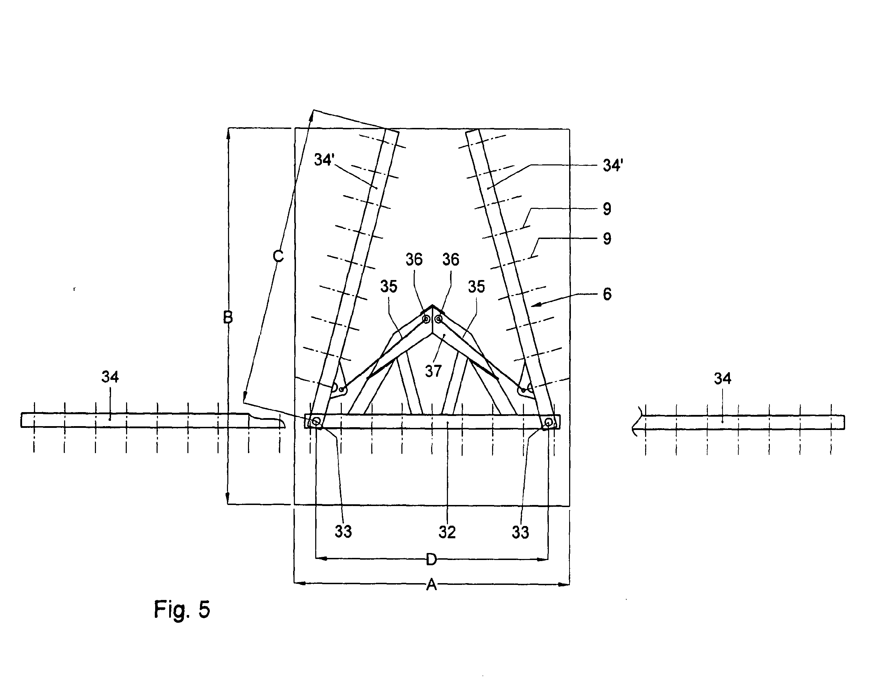

In operating condition, a main beam 6 is fixed in a fixed position with respect to the chassis 2 and extends horizontally and transversely to a direction of advance 7. From the main beam 6 project a number of juxtaposed disc carriers 8. According to this example, the disc carriers 8 project mainly rearwards and, depending on the operating condition, downwards. In principle, however, it is also possible to provide that the disc carriers, instead of projecting rearwards, project forwards and downwards, or downwards alone. In Fig. 4 a number of the mounting positions of disc carriers are only marked by lines and in Fig. 5 this is the case for all mounting positions. In Figs. 4 and 5, a few of those lines are designated with reference numeral 9.

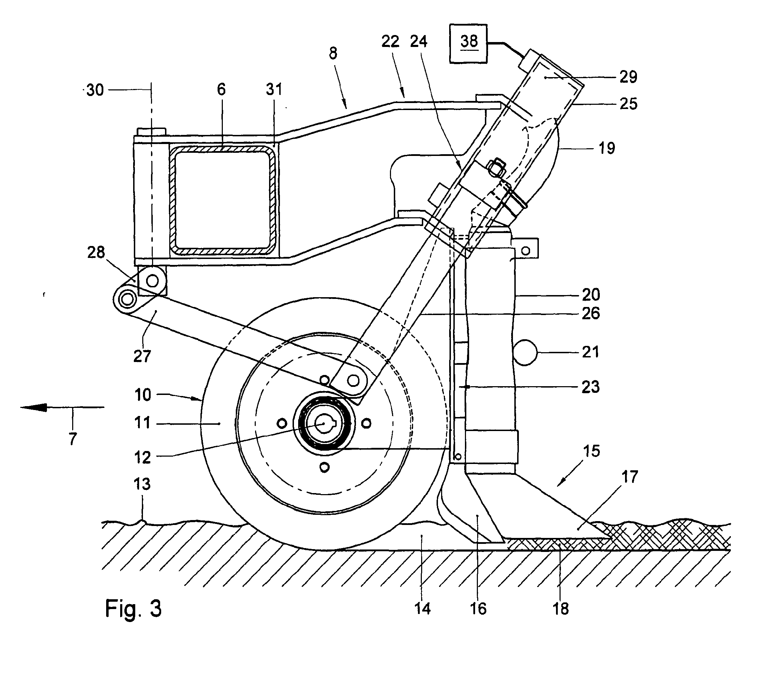

Discs 10, each having a peripheral zone 11 arranged for forming a slit in the soil 13, are each rotatably bearing-mounted about an axis of rotation 12 thereof and, via the bearing, mounted on one of the disc carriers 8. In Fig. 4 not all discs are designated by a reference numeral. The peripheral zone 11 according to this example, viewed in cross section, is V-shaped, so that V-shaped slits 14 are formed if the discs 10, in the working position represented in Fig. 3, roll in the direction of advance 7.

Manure injectors 15 are situated next to each other in positions which, viewed in the direction of advance 7, are each situated behind one of the discs 8. In Figs. 1 and 4, not all manure injectors 15 are indicated with reference numerals. According to this example, the manure injectors 15 are made up of outflow spout protectors 16 and outflow spouts 17. In operation, the outflow spout protectors 16 protect the outflow spout 17, from which manure 18 flows out into the slit 14. The outflow spouts 17 are manufactured from flexible material (rubber, according to this example) and the outflow spout protectors are manufactured from a more form-retaining material, such as steel.

The manure pump 5 for pumping liquid manure is connected with the manure injectors 15 via manure distribution channels which, according to this example, pass through hoses 19. Situated above the manure injectors 15, according to this example, are pinch-off tubes 20, integrally formed with the outflow spouts, which by means of hydraulically operable pinch-off anchors 21 can be pinched off to prevent outflow of manure after the manure pump 5 has been switched off.

The disc carriers 8 are each subdivided into a fixed part 22 which is fixed with respect to the main beam 6, at least in vertical direction, and a movable part 23 movable with a vertical directional component. The disc carriers 8 are further each provided with an operating element 24 for moving the movable part 23 of the disc carrier 8 from a pulled-up position to a working position and for, in the working position, pressing into the soil 13 a peripheral portion of the discs 10 mounted rotatably on the movable part 23 of the respective disc carrier 8. The operating elements 24 according to this example are double-acting hydraulic cylinders, so that these can also operate the pulling up of discs 10 and the manure injectors 15. It is also possible, however, to drive the pulling up with other means, for instance through spring force exerted by a spring element.

Regardless of whether the operating elements are double-acting, it is advantageous if spring elements are provided which urge the movable parts 23 with a spring force to the pulled-up position. Through the spring elements a relation is created between the position of the movable part 23 and pressure exerted by the operating element 24. In this way, in turn, the effect is obtained that upon putting all operating elements 24 under an identical pressure, all discs are brought into approximately the same position.

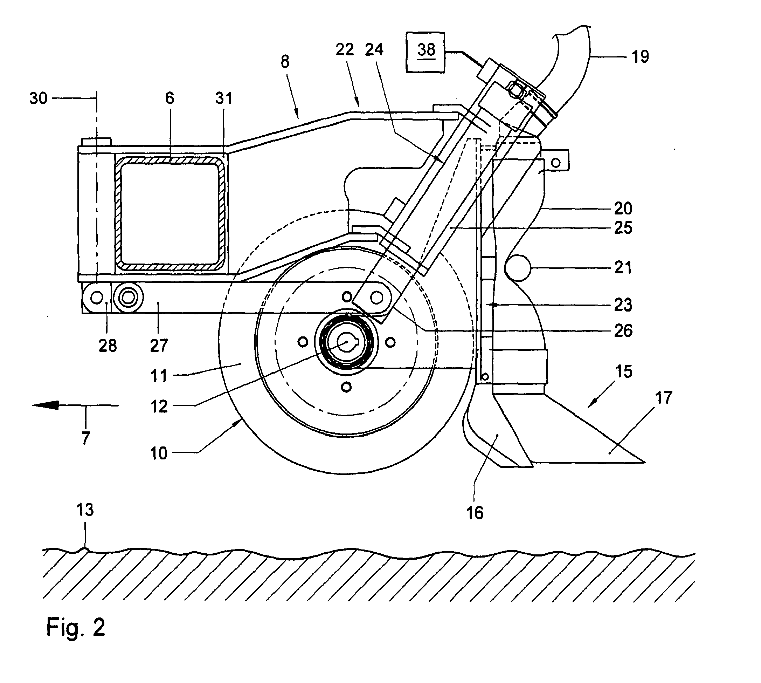

The operating elements are each designed as a telescopic leg 24 with a fixed part 25 forming a fixed portion of the fixed part 22 of the disc carrier 8, and a movable part 26 which is guided telescopically relative to the fixed part 25 and which forms a fixed portion of the movable part 23 of the disc carrier 8. By virtue of the telescopic guidance of the movable parts 26 of the operating elements 24 relative to the fixed parts 25 thereof, the guidance of the vertical freedom of movement of the discs 10 is realized in a simple manner and the operating elements further contribute to the guidance of the movements of the discs 8 between the pulled-up transport and maneuvering position represented in Fig. 2 and the lowered, working position represented in Fig. 3. The bearings of the discs 10 with which the discs 10 are bearing-mounted rotatably about their centerlines 12, are immovably fixed with respect to the respective disc carrier parts 23. In this way, an accurate guidance of the discs 10 relative to the fixed disc carrier parts 22 is obtained. For an accurate guidance, it is further advantageous that the movable parts 26 of the operating elements 24 each form an immovably fixed portion of the movable parts 23 of the respective disc carriers 8.

The movable parts 23 carry not only the discs 8 but also the manure injectors 15, so that these move along with the discs 10 between the transport and maneuvering position and the working position.

According to this example, the movable parts 26 of the hydraulic cylinders 24 are rotatable about a centerline thereof relative to the fixed parts 25 of the hydraulic cylinders 24. In order to keep the discs 10, despite this mutual rotatability, oriented in the direction of advance, the movable parts 23 of the disc carriers 8 are each coupled to a steering rod 27 which, at a distance from the centerline of the operating element 24, is coupled to the fixed part 22 of the respective disc carrier 8. According to this example, the steering rods 27 are each coupled via a rocker 28 to the fixed part 22 of the respective disc carrier 8, so that the steering guides 27, 28 can each adjust to the relative position of the fixed part 22 and the movable part 23 of the disc carrier 8. This coupling can also be realized with, for instance, a sliding guide or via a draw spring.

In operating condition, the part 26 of each of the legs 24, which is telescopically movable relative to the fixed part 25, is movable, while being telescopically guided, in a direction at an angle of preferably 40-80° with respect to a horizontal plane, depending *inter alia* on the shape of the discs and the hardness of the soil. In this way, the line of action of the force exerted on the telescopic leg 24 when forming a slit is approximately parallel to the direction in which the guide allows movement of the movable part 26 relative to the fixed part 25 of the telescopic leg 24. Transverse forces on the telescopic guide are thereby limited. For a particularly effective limitation of these transverse forces, the angle with respect to a horizontal plane, such as the surface of the soil 13, at which the movable part 26 of each of the legs 24 in operating condition is telescopically movably guided, is preferably steeper than 45° and in particular preferably steeper than 55° and preferably more level than 75° and in particular preferably more level than 65°.

As the telescopic legs are each designed as a hydraulic spring leg 24, operation can be realized simply and reliably, while use can be made of the hydraulic system of a tractor which pulls the apparatus over a parcel of land to be manured.

The telescopic legs 24 each have a chamber 29 for holding fluid for exerting a force on the movable part 26 of the telescopic leg 24. At least two of the chambers 29 are then mutually connected. In this way, the positions of the discs 10 with respect to the main beam 6 can adjust to unevennesses and curvatures in the terrain, whereby, regardless of the mutual vertical movements of the discs 10, the pressure on each of the discs 10 is in principle kept constant.

According to this example, each of the disc carriers 8 carries two discs 10 and two manure injectors 15. It is also possible, however, that each disc carrier carries only one disc and one manure injector or three or more discs and three or more manure injectors. Further, the number of discs and manure injectors per disc carrier does not need to be the same for all disc carriers.

Further, according to this example, the chambers 29, for holding fluid for exerting a force on the movable part 26 of the telescopic leg 24, are connected with a shared pressure source 38, so that the chambers 29 can be simply put under the same fluid pressure and hence the discs 10 can be simply pressed into the soil with the same force. The pressure source 38 is preferably designed as a fluid accumulator containing a compressible medium under pressure, so that the discs 10 are resiliently mounted relative to the main beam 6. Peak pressures operatively occurring in the hydraulic system are thereby reduced.

The fixed part 22 of each of the disc carriers 8 is bearing-mounted so as to be capable of swiveling with respect to the main beam 6 about a vertically extending steering axis 30. In this way, in a manner comparable to caster wheels, the discs 10 can steer along with the apparatus when it follows a curved path during manuring. In Fig. 4 not all steering axes 30 are indicated with a reference numeral. It is also possible to provide that the fixed parts of the disc carriers are completely fixed with respect to the main beam and to effect their steering along exclusively through a suitable dimensioning of the caster of each disc or each set of discs carried by a disc carrier, in each case with respect to the centerline about which the movable part of the telescopic leg is rotatable relative to the fixed part of the telescopic leg. In particular, in such a design, it may be advantageous to have the disc carriers project forwards and downwards or just downwards from the main beam.

According to the present example, the axes of rotation 12 of the discs 10 are situated rearwards of the centerline of the main beam 6 and of most disc carriers 8 the steering axes 30 are situated forwards of the centerline of the main beam 6. Accordingly, those disc carriers 8 project rearwards from the main beam 6 over a relatively short distance, which yields a compact construction. For a compact construction, it is then further advantageous that the main beam 6 extends through openings 31 in the disc carriers 8.

As is represented in Figs. 4 and 5, the main beam 6 has a central portion 32 and outer portions 34 on opposite sides of the central portion 32, which outer portions 34 can be hinged upwards about hinge axes 33 extending in the direction of advance. In Fig. 5 the outer portions in upwardly hinged position are designated with reference numeral 34'. By virtue of the outer portions 34 being capable of hinging into an approximately vertical position, an apparatus having a working width greater than 3 m can be made narrower for the purpose of driving on public roads, so that the apparatus remains within the maximum width of 3 m permitted for agricultural vehicles on public roads. For hinging the outer portions 34 of the main beam 6 upwards, these portions 34 are coupled to cables 35 which pass via guides 36 in a frame 37 above the main beam 6 and which can be pulled by means of a hydraulic cylinder, not shown.

As in the apparatus according to the invention the discs 10 and manure injectors 15 can be pulled up from the working position with respect to the main beam 6 over a great distance, they, in pulled-up position, project little in downward direction with respect to the main beam 6. As a result, during transport, these parts project little in the width direction from the upwardly swiveled outer parts 34' of the main beam 6 (see Fig. 5). At a fixed maximum permissible width A and height B of the apparatus in the transport position, this in turn allows a greater maximum width D of the central portion 32 of the main beam 6. As a result, a greater total working width C+D in extended condition (Fig. 4) is obtained.

## Claims

1. An apparatus for manuring farmland, comprising:
a main beam (6) extending, at least in operating condition, horizontally and transversely to a direction of advance (7);
juxtaposed disc carriers (8) projecting from the main beam (6);
discs (10) which each have a peripheral zone (11) arranged for forming a slit (14) in the soil (13) and are bearing-mounted on the disc carriers (8) so as to be rotatable about an axis of rotation (12) of the respective disc (10);
juxtaposed manure injectors (15) each situated, viewed in the direction of advance (7), behind one of the discs (10);
a manure pump (5) for pumping liquid manure; and
manure distribution channels (19) which connect the manure pump (5) with the manure injectors (15);
wherein the disc carriers (8) each comprise at least one fixed part (22) fixed with respect to the main beam (6) at least in vertical direction and a movable part (23) movable with a vertical directional component, and are provided with an operating element (24) for moving the movable part (23) from a pulled-up position to a working position and for, in the working position, pressing into the soil a peripheral portion of at least one of the discs (10) rotatably mounted on the movable part (23) of the respective disc carrier (8);
**characterized in that** the operating elements are each designed as a telescopic leg (24), comprising a fixed part (25) forming a fixed portion of the fixed part (22) of the disc carrier (8) and a movable part (26) which is guided telescopically relative to the fixed part (25) and which forms a portion of the movable part (23) of the disc carrier (8).

2. An apparatus according to claim 1, wherein the part (26) of each of the legs (24), guided telescopically relative to the fixed part (25), is telescopically guided, in the operating condition, in a direction at an angle of 40-80° with respect to a horizontal plane.

3. An apparatus according to claim 1 or 2, wherein the telescopic legs (24) are each designed as a hydraulic spring leg.

4. An apparatus according to any one of the preceding claims, wherein the telescopic legs (24) each comprise a chamber (29) for holding fluid for applying a force to the movable part (26) of the telescopic leg (24) and
wherein at least two of said chambers (29) communicate mutually.

5. An apparatus according to any one of the preceding claims, wherein the telescopic legs (24) each comprise a chamber (29) for holding fluid for applying a force to the movable part (26) of the telescopic leg (24) and
wherein at least two of said chambers (29) communicate with a shared fluid pressure source (38).

6. An apparatus according to any one of the preceding claims, wherein of each of the telescopic legs (24) the movable part (26) is connected with a steering arm (27) which at a distance from a centerline of the telescopic leg (24) is coupled to the disc carrier (8) of which the telescopic leg (24) forms a portion.

7. An apparatus according to any one of the preceding claims, wherein of each of the disc carriers (8) the fixed part (22) is capable of swiveling relative to the main beam (6) about a vertically extending steering axis (30).

8. An apparatus according to claim 7, wherein of at least a number of the discs (10) the axes of rotation (12) are each situated rearwards of a centerline of the main beam (6) and wherein at least a number of the associated steering axes (30) are situated forwards of the centerline of the main beam (6).

9. An apparatus according to any one of the preceding claims, wherein the main beam (6) has a central portion (32) and, on opposite sides of the central portion (32), outer portions (34, 34') capable of hinging upwards about hinge axes (33) extending in the direction of advance (7).

10. An apparatus according to any one of the preceding claims, comprising a chassis (2) which carries the main beam (6), and wheels (3) connected with the chassis (2).
